Europäisches Patentamt

European Patent Office

Office européen des brevets

(11) Veröffentlichungsnummer: **0 371 365**
**A1**

## (12) EUROPÄISCHE PATENTANMELDUNG

(21) Anmeldenummer: **89121448.8**

(22) Anmeldetag: **20.11.89**

(51) Int. Cl.⁵: **B65G 23/06**

(30) Priorität: **29.11.88 DE 3840115**

(43) Veröffentlichungstag der Anmeldung:
**06.06.90 Patentblatt 90/23**

(84) Benannte Vertragsstaaten:
**AT BE CH DE ES FR GB IT LI NL**

(71) Anmelder: **KLÖCKNER-BECORIT GMBH**
**Wartburgstrasse 21-25**
**D-4620 Castrop-Rauxel 2(DE)**

(72) Erfinder: **von Glischinski, Hans**
**Holderling Strasse 72**
**D-4630 Bochum(DE)**

(74) Vertreter: **Funken, Josef, Dipl.-Ing.**
**Hochstrasse 3e**
**D-4133 Neukirchen-Vluyn(DE)**

(54) **Kettenkratzerförderer.**

(57) Bei einem Kettenkratzerförderer für den Untertagebergbau mit wenigstens einem Kettenrad (1) zum Antreiben des Kettenkratzerförderers, wobei das Kettenrad (1) auf einer Radtrommel (2) wenigstens einen Triebstockkranz (11,12) mit mehreren auf dem Umfang der Radtrommel (2) gleichmäßig verteilt angeordneten Triebstockzähnen (13,14,15) aufweist und zu beiden Seiten des Triebstockkranzes (11,12) je einen Polygonring (55,56) mit einer Ringnut (59) hat, mit einem Doppelkettenband (76) aus Rundgliederketten (74,84), in dem in bestimmten Abständen Kratzeisen (39,51,52) angeordnet sind, und mit einer Förderrinne, in der das Kettenband läuft, ist vorgesehen, daß an den Enden (53,54) des Kettenrades (1) außen je ein Polygonring (55,56) mit einer Ringnut (59) zum Umlenken und Führen des Kettenbandes (76) vorgesehen ist, daß nahe den Polygonringen (55,56) weiter innen am Kettenrad (1) je ein Triebstockkranz (11,12) mit mehreren Triebstockzähnen (13,14,15) vorgesehen ist, die unmittelbar an den Kratzeisen (39,51,52) angreifen, und daß das Doppelkettenband (76) als Doppelaußenkettenband ausgebildet ist

FIG. 3

## Kettenkratzerförderer

Die Erfindung betrifft einen Kettenkratzerförderer für den Untertagebergbau mit wenigstens einem Kettenrad zum Antreiben des Kettenkratzerförderers, wobei das Kettenrad auf einer Radtrommel wenigstens einen Triebstockkranz mit mehreren auf dem Umfang der Radtrommel gleichmäßig verteilt angeordneten Triebstockzähnen aufweist und zu beiden Seiten des Triebstockkranzes je einen Polygonring mit einer Ringnut hat, mit einem Doppelkettenband aus Rundgliederketten, in dem in bestimmten Abständen Kratzeisen angeordnet sind, und mit einer Förderrinne, in der das Kettenband läuft.

Aus der DE-PS 29 07 708 ist ein Kettenkratzerförderer mit Kettenrädern und einem in einer Förderrinne laufenden Kettenband bekannt. Das Kettenrad besteht aus einer aus zwei gleichen Radhälften zusammengeschraubten Radtrommel, auf der ein Triebstockkranz mit auswechselbaren Zahnrollen angeordnet ist. Zu beiden Seiten des Triebstockkranzes ist je ein Polygonring mit einer Ringnut vorgesehen. Über die beiden Polygonringe werden die beiden Ketten umgelenkt. Dabei legen sich die horizontalen Kettenglieder so auf die Polygonringe, daß die einzelnen Kettenglieder nicht durch Querkräfte und Biegemomente belastet werden. Die vertikalen Kettenglieder tauchen mit allseitigem Abstand in die Ringnut der Polygonringe. Der Abstand der beiden Ketten zueinander entspricht annähernd der Breite eines Kettengliedes. Die beiden Ketten verlaufen somit nahe beieinander.

Das Kettenband besteht aus einzelnen auswechselbaren gleichlangen Kettengeschirren, wobei ein Geschirr aus einem Knotengelenk und zwei gleichlangen Rundgliederketten mit normalen Kettengliedern besteht. Das Knotengelenk besteht aus einem Kuppelglied, zwei Verbindungsbrücken, zwei Zahnbrücken und einem dreiteiligen Kratzeisen. Die Verbindungsbrücken verbinden das Kuppelglied mit den beiden Ketten des Kettenbandes. An der Verbindungsbrücke ist eine Zahnbrücke angeordnet. Das Kettenrad greift mit dem Triebstockkranz zwischen die beiden Ketten, so daß die Krafteinleitung in das Kettenband von den Zahnrollen des Triebstockkranzes über die Zahnbrücke in das Kettenband eingeleitet wird. Dabei werden die Ketten weitgehend geschont, weil die Krafteinleitung nicht unmittelbar von dem Kettenrad in die Ketten erfolgt.

Die Doppelkette verläuft entweder in der Mitte der Förderrinne oder in einer seitlichen Hälfte der Förderrinne. Die Ketten dieses Kettenbandes liegen somit weitgehend ungeschützt gegen von oben wirkende Kräfte, so daß eine Verwendung dieses Kettenbandes beispielsweise in Brecheranlagen unzweckmäßig ist.

Aus dem DE-GM 16 76 197 ist ein Kratzerförderer bekannt, dessen Kettenband aus zwei Außenketten mit daran in bestimmten Abständen befestigten Kratzerstegen besteht. Die Kratzerstege sind an beiden Enden auf Rollen so gelagert, daß sie die Transportbahn, auf der die Rollen abrollen, nicht berühren. An den Umkehrstellen des Förderers sind zwei Trommeln mit Abstand zueinander vorgesehen, von denen eine angetrieben ist. Über die Trommeln sind kurze Antriebsketten mit Mitnehmern gelegt, wobei die Mitnehmer der Antriebskette den gleichen Abstand voneinander haben wie die Rollen des Kettenbandes. Die Mitnehmer der Antriebskette greifen hinter die Rollen des Kettenbandes und treiben auf diese Weise das Kettenband an, ohne daß die Außenketten des Kettenbandes mit den Mitnehmern der Antriebskette in Berührung kommen. Der Aufwand an der Umkehrstelle des Förderers ist vergleichsweise hoch, weil zwei Trommeln und zwei über die Trommeln gelegte Antriebsketten erforderlich sind. Hinzu kommt, daß das Kettenband des Kratzerförderers durch die Antriebskette lediglich in einer einzigen Richtung angetrieben werden kann. Ein Antrieb des Kettenbandes in Vor- und Rücklaufrichtung ist somit nicht möglich.

Dieser Kratzerförderer ist sehr empfindlich gegen von oben wirkende Kräfte, weil dadurch die Achsen der Rollen auf Biegung beansprucht würden und der Förderer außer Betrieb fiele. Somit kann dieser Förderer ebenfalls nicht in Brecheranlagen eingesetzt werden.

Der Erfindung liegt die Aufgabe zugrunde, einen Kettenkratzerförderer der vorstehend beschriebenen Art unter Beibehaltung des dort erzielten Vorteils, nämlich den nachteiligen Kraftangriff von den für das Kettenband verwendeten Rundstahlketten fernzuhalten und den Verschleiß der Kette zu vermindern, zu schaffen, der auch für Brecheranlagen verwendbar und in beiden Richtungen antreibbar ist.

Diese Aufgabe wird erfindungsgemäß dadurch gelöst, daß an den Enden des Kettenrades außen je ein Polygonring mit einer Ringnut zum Umlenken und Führen des Kettenbandes vorgesehen ist, daß neben den Polygonringen weiter innen am Kettenrad wenigstens ein Triebstockkranz mit mehreren Triebstockzähnen vorgesehen ist, der unmittelbar an den Kratzeisen angreift, und daß das Doppelkettenband als Doppelaußenkettenband ausgebildet ist.

Des weiteren besteht die Erfindung darin, daß an den Enden des Kettenrades außen je ein Polygonring mit einer Ringnut zum Umlenken und Führen des Kettenbandes vorgesehen ist, daß nahe den Polygonringen weiter innen am Kettenrad je ein Triebstockkranz mit mehreren Triebstockzähnen vorgesehen ist, die unmittelbar an den Kratzeisen angreifen, und daß das Doppelkettenband als Doppelaußenkettenband ausgebildet ist.

Auf diese Weise gelangt man zu einem Kettenkratzerförderer, bei dem der Verschleiß der Kette und des Triebstockrades wesentlich vermindert sind und die Standzeit dieser Teile somit wesentlich erhöht ist. Hinzu kommt, daß dieser Kettenkratzerförderer auch für Brecheranlagen verwendbar und in beiden Richtungen antreibbar ist, da die Ketten des Kettenbandes zu beiden Seiten weit außen so geführt sind, daß sie durch Verwendung in einer Brecheranlage nicht nachteilig beeinflußt werden.

Jeder Triebstockkranz kann zwei bis sechs Triebstockzähne aufweisen. Zweckmäßig weist jeder Triebstockkranz drei Triebstockzähne auf. Drei Triebstockzähne je Triebstockkranz genügen im allgemeinen, um eine ausreichende Überdeckung sicherzustellen, so daß eine hohe Betriebssicherheit gewährleistet ist.

Zweckmäßig besteht ein Triebstockzahn aus einer Zahnbasis und je einem Zahnkopf an beiden Enden der Zahnbasis für den Antrieb in beiden Drehrichtungen. - Dadurch ist si chergestellt, daß der Kettenkratzerförderer in beiden Richtungen angetrieben werden kann.

Hierbei empfiehlt es sich die Zahnbasis mit der Zahntrommel zu verschweißen und die Zahnköpfe mit der Zahnbasis auswechselbar zu verschrauben. - Durch die Verschraubung der Zahnköpfe mit der Zahnbasis ist es ohne weiteres möglich, in bestimmten Zeitabständen die Zahnköpfe nach entsprechendem Verschleiß auszuwechseln, so daß sich im übrigen am Kettenrad selbst kein nennenswerter Verschleiß einstellt.

Zweckmäßig besteht das Triebstockrad aus zwei gleichen Radhälften, die miteinander verschraubt sind, so daß die Montage und Demontage des Triebstockrades keine Schwierigkeiten verursacht.

Vorteilhaft sind die Polygonringe in Schwalbenschwanzführungen des Kettenrades eingesetzt. - Damit entfällt eine zusätzliche Befestigung der Polygonringe an dem Kettenrad.

Des weiteren kann die Anordnung so getroffen sein, daß die Kratzeisen an beiden Enden Mitnahmestifte aufweisen, die in die vertikalen Kettenglieder der Außenketten eingreifen.

Hierbei ist zweckmäßig zwischen den Mitnahmestiften und den Kratzeisen jeweils eine Sollbruchstelle vorgesehen, wobei die Bruchkraft der Sollbruchstelle geringer ist als die Bruchkraft der Kette. - Dadurch ist sichergestellt, daß bei einer Überlastung des Kettenbandes nur der Mitnahmestift an der Sollbruchstelle bricht, während die Ketten unbeschädigt bleiben.

Die Erfindung wird nachfolgend anhand eines in den Zeich nungen dargestellten Ausführungsbeispieles des näheren erläutert. Es zeigt

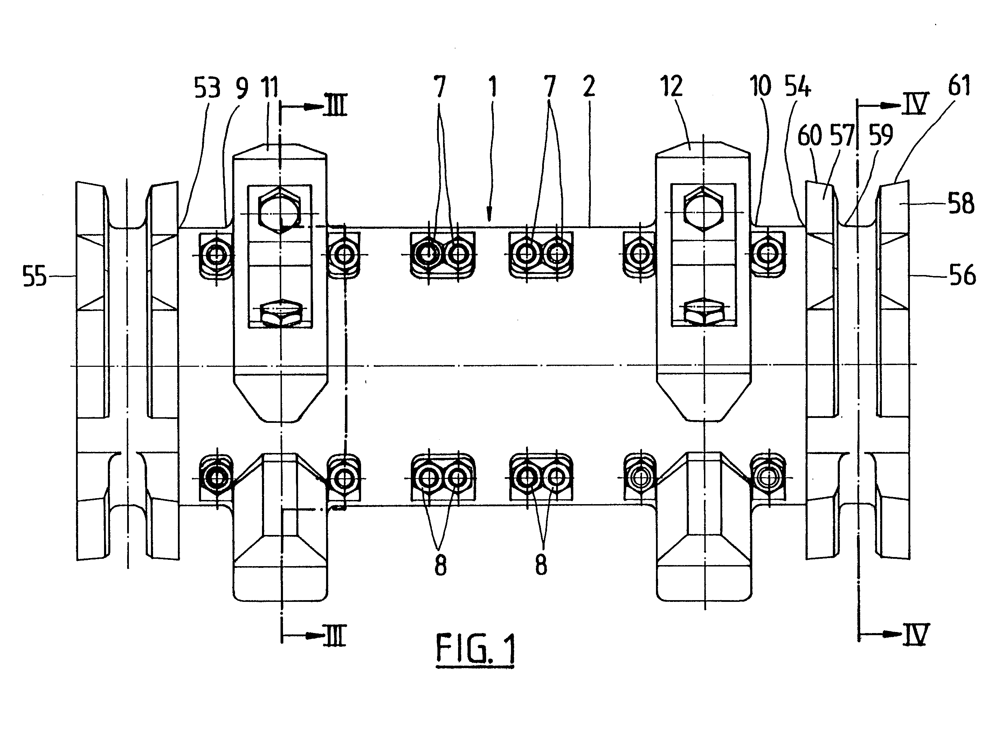

Fig. 1 eine Ansicht auf ein erfindungsgemäß ausgebildetes Kettenrad,

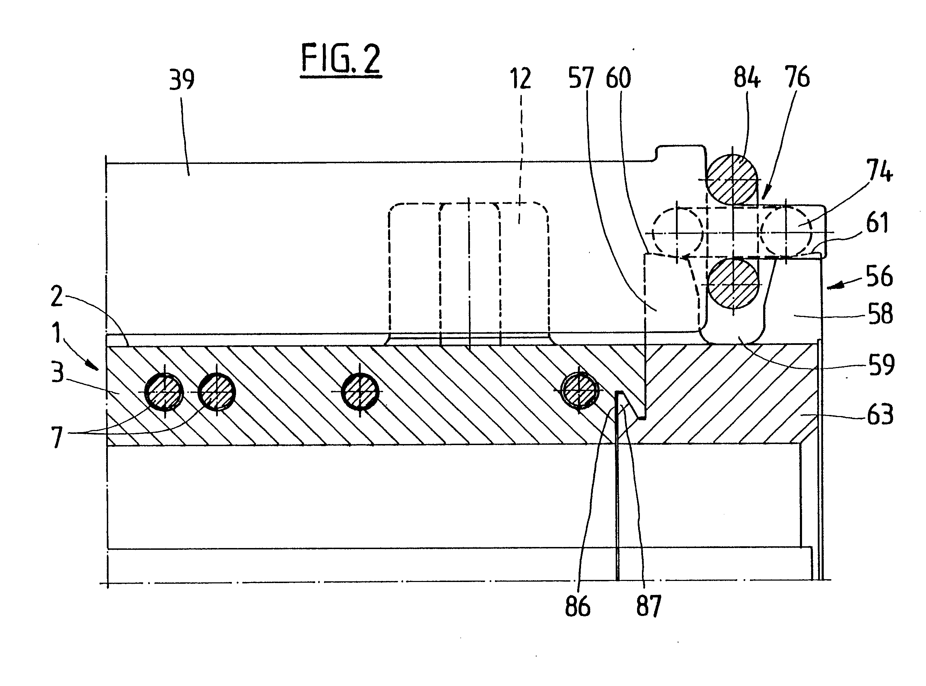

Fig. 2 einen Mittellängsschnitt durch die rechte obere Hälfte der Figur 1,

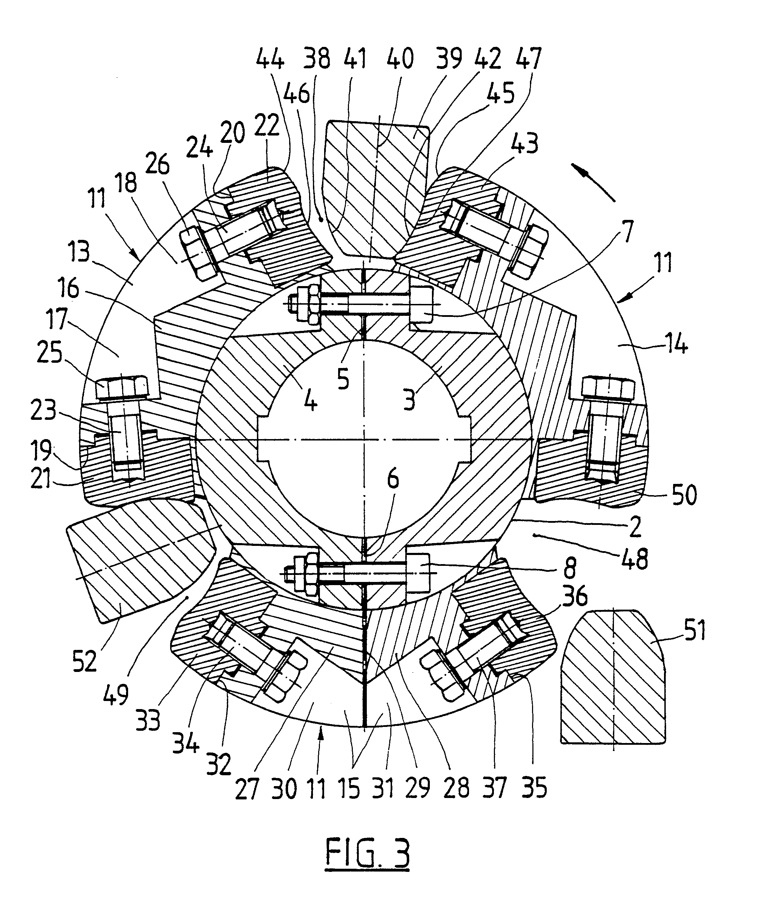

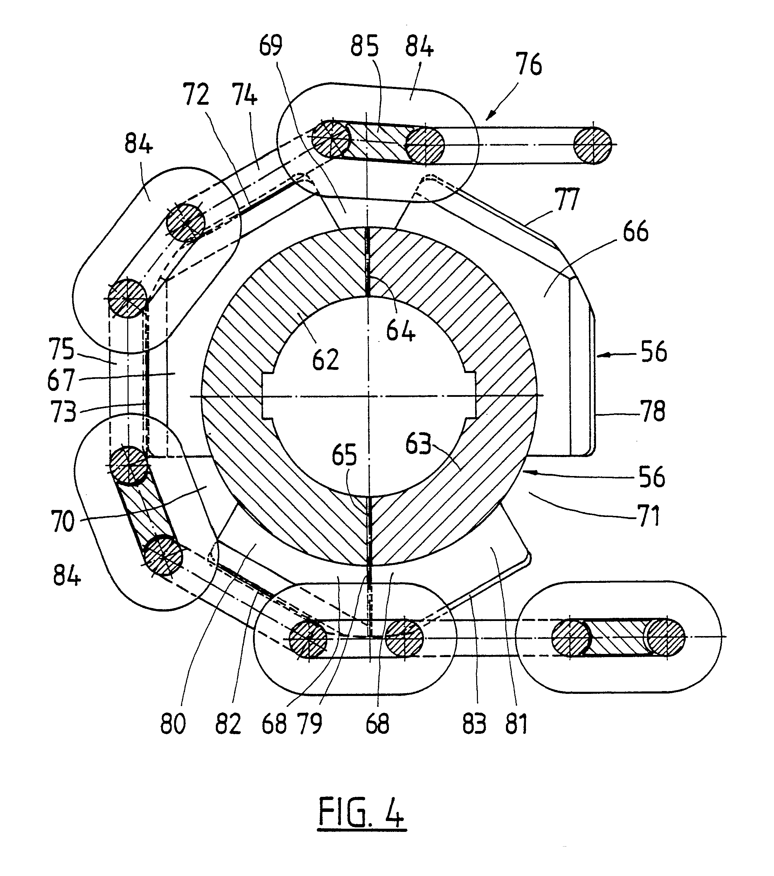

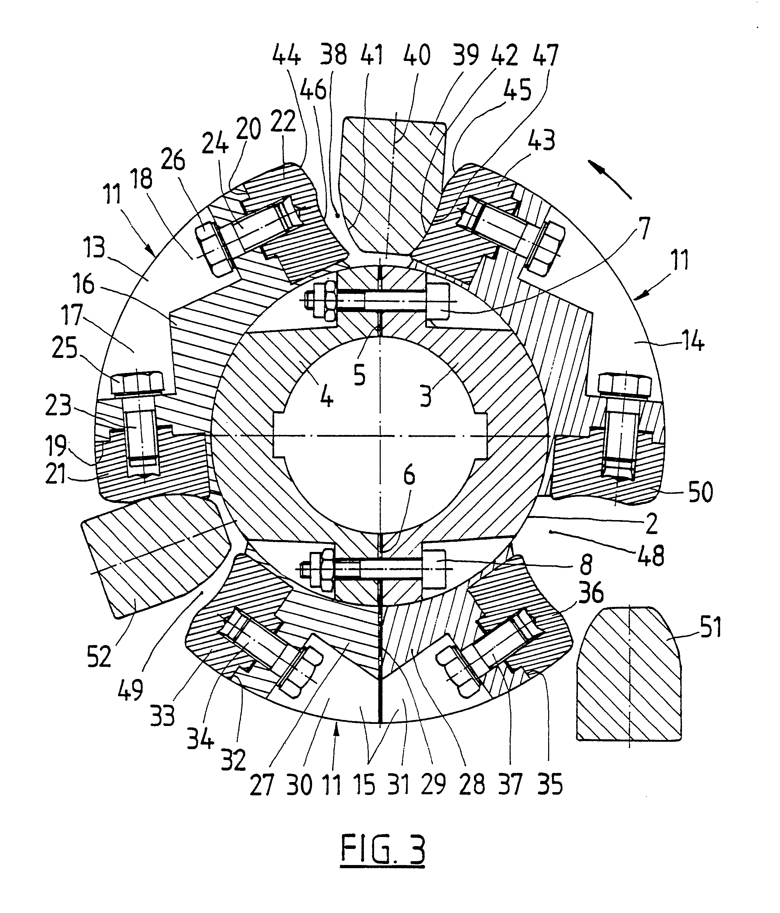

Fig. 3 einen Schnitt längs der Linie III-III der Figur 2 und

Fig. 4 einen Schnitt längs der Linie IV-IV der Figur 2.

Das in der Zeichnung dargestellte Kettenrad 1 dient zum Antreiben eines in einer Förderrinne laufenden Doppelkettenbandes. Das Kettenrad 1 hat eine Radtrommel 2, die aus zwei gleichen Trommelhälften 3,4 unter Bildung einer Teilfuge 5,6 mittels Schrauben 7,8 zusammengeschraubt ist.

Nahe den beiden Enden 9,10 sind Triebstockkränze 11,12 auf der Radtrommel 1 festgeschweißt. Jeder der Triebstockkränze 11,12 besteht aus drei Triebstockzähnen 13,14,15. Die Triebstockzähne 13,14 sind gleich ausgebildet. Der Triebstockzahn 13 besteht aus einer Triebstockbasis 16 mit zwei ineinander übergehenden Ausnehmungen 17,18. An beiden Stirnseiten 19,20 der Triebstockbasis 16 sind Triebstockköpfe 21,22 vorgesehen, die mittels Schrauben 23,24 mit der Zahnbasis 16 verbunden sind, wobei die Schraubenköpfe 25,26 der Schrauben 23,24 sich in den Ausnehmungen 17,18 der Triebstockbasis 16 befinden.

Der Triebstockzahn 14 ist in der gleichen Weise aufgebaut, wie der vorstehend beschriebene Triebstockzahn 13.

Der Triebstockzahn 15 besteht aus zwei Basisteilen 27,28, die durch eine Teilfuge 29 voneinander getrennt sind. Der Basisteil 27 hat eine Ausnehmung 30, die mit einer entsprechenden Ausnehmung 31 des Basisteiles 28 in Verbindung steht. Am Stirnende 32 des Basisteiles 27 ist ein Basiskopf 33 vorgesehen, der mittels der Schraube 34 mit dem Basisteil 27 verbunden ist. In der gleichen Weise ist am vorderen Stirnende 35 des Basisteiles 28 ein Basiskopf 36 vorgesehen, der mittels einer Schraube 37 mit dem Basisteil 28 verschraubt ist. Zwischen den Triebstockzähnen 13,14 ist eine Mulde 38 vorgesehen, in die ein Kratzeisen 39 eintaucht. Das Kratzeisen 39 ist symmetrisch zu der Mittelfläche 40 ausgebildet und hat im unteren Bereich zwei gegenüberliegende gekrümmte Flanken 41,42.

Die beiden die Mulde 38 einschließenden Zahnköpfe 22 und 43 sind an ihren gegenüberliegenden Stirnflächen 44,45 mit umgekehrt gekrümmten Flächen 46,47 versehen, und zwar derart, daß die jeweils miteinander im Eingriff befindlichen gekrümmten Flächen 42 und 47 bzw. 41 und 46 sich großflächig berühren.

Auch die anderen Mulden 48,49 zwischen den Zahnköpfen 50 und 36 bzw. den Zahnköpfen 21 und 33 sind zur Aufnahme der entsprechenden Kratzeisen 51,52 ebenso ausgebildet wie die vorstehend beschriebenen Zahnköpfe 22,43 und das Kratzeisen 39.

An den beiden Enden 53,54 des Kettenrades 1 sind Polygonringe 55,56 vorgesehen. Der Polygonring 56 besteht aus zwei mit Abstand zueinander parallel angeordneten Polygonscheiben 57,58, zwischen denen eine Ringnut 59 gebildet ist. Die beiden Polygonscheiben 57,58 haben schräg zueinander verlaufende Tragflächen 60,61.

Der Polygonring 55 ist ebenso wie der vorstehend beschriebene Polygonring 56 ausgebildet.

Der Polygonring 56 besteht aus zwei Ringhälften 62,63, zwischen denen eine Teilfuge 64,65 ausgebildet ist. Die Polygonscheibe 56 besteht aus drei Teilscheiben 66,67,68, die zwischen sich Ausnehmungen 69,70,71 für die Aufnahme der Kratzeisen 39,51,52 bilden. Die Teilscheibe 67 hat zwei Auflager 72,73 zur Lagerung der horizontalen Kettenglieder 74,75 einer aus Rundgliederketten bestehenden Kette 76. Desgleichen hat auch die Teilscheibe 66 zwei Lager 77,78 für die horizontalen Kettenglieder der Kette 76.

Die Teilscheibe 68 ist durch eine Nut 79 in zwei Scheibenhälften 80,81 geteilt, die ebenfalls Lager 82,83 für die horizontalen Kettenglieder der Kette 76 aufweisen.

Die horizontalen Kettenglieder 74,75 liegen im wesentlichen über ihre gesamte Länge dicht auf den Lagern 72,73,77,78,82,83, so daß die horizontalen Kettenglieder 74,75 nicht mit Querkräften und Biegemomenten belastet werden.

Die zwischen je zwei benachbarten horizontalen Kettengliedern 74,75 befindlichen vertikalen Kettenglieder 84 tauchen in die Ringnut 59, wobei ein allseitiger Abstand zwischen der Ringnut 59 und dem vertikalen Kettenglied 84 eingehalten ist.

An beiden Enden der Kratzeisen 39 sind Mitnahmestifte 85 vorgesehen, die durch die vertikalen Kettenglieder 84 der Kette 76 gesteckt sind. Zwischen den Mitnahmestiften 85 und den Kratzeisen 39 ist jeweils eine Sollbruchstelle vorgesehen, wobei die Bruchkraft der Sollbruchstelle geringer ist als die Bruchkraft der Kette 76.

Die Radtrommel 2 hat an den beiden Enden 53,54 eine ringförmig umlaufende Schwalbenschwanzführung 86, in die ein entsprechender Führungsring 87 eingreift. Beim Zusammenbau des Triebstockrades 1 wird zunächst die Ringhälfte 63 des Polygonringes 56 mit dem Führungsring 87 in die Schwalbenschwanzführung 86 der Trommelhälfte 3 eingelegt. Desgleichen wird die andere Ringhälfte 62 des Polygonringes mit seinem entsprechenden Führungsring in die Schwalbenschwanzführung der Radhälfte 4 eingelegt. Anschließend werden die beiden Radhälften 3,4 mit den eingesetzten Polygonringhälften 62,63 mittels der Schrauben 7,8 miteinander verschraubt.

Beim Betrieb des Kettenkratzerförderers liegt der Zahnkopf 43 gegen das Kratzeisen 39 an, wodurch die Krafteinleitung in das Kettenband 76 erfolgt. Die Kette 76 selbst wird auf den Polygonringen 55,56 lediglich umgelenkt und geführt, ohne daß die Kette 76 hierdurch belastet wird. Insbesondere erfolgt keine Krafteinleitung durch die Polygonringe 55,56 in die Kette 76. Die Krafteinleitung in das Kettenband erfolgt ausschließlich durch die Triebstockkränze bzw. die Triebstockzähne unmittelbar in die zugehörigen Kratzeisen. Es erfolgt keine Relativbewegung zwischen der Kette 76 und den Polygonringen 55,56, was sich verschleißmindernd auf die Kette 76 und die Polygonringe 55,56 auswirkt.

## Ansprüche

1. Kettenkratzerförderer für den Untertagebergbau mit wenigstens einem Kettenrad zum Antreiben des Kettenkratzerförderers, wobei das Kettenrad auf einer Radtrommel wenigstens einen Triebstockkranz mit mehreren auf dem Umfang der Radtrommel gleichmäßig verteilt angeordneten Triebstockzähnen aufweist und zu beiden Seiten des Triebstockkranzes je einen Polygonring mit einer Ringnut hat, mit einem Doppelkettenband aus Rundgliederketten, in dem in bestimmten Abständen Kratzeisen angeordnet sind, und mit einer Förderrinne, in der das Kettenband läuft,
**dadurch gekennzeichnet,**
daß an den Enden (53,54) des Kettenrades (1) außen je ein Polygonring (55,56) mit einer Ringnut (59) zum Umlenken und Führen des Kettenbandes (76) vorgesehen ist, daß neben den Polygonringen (55,56) weiter innen am Kettenrad (1) wenigstens ein Triebstockkranz (11,12) mit mehreren Triebstockzähnen (13,14,15) vorgesehen ist, der unmittelbar an den Kratzeisen (39,51,52) angreift, und daß das Doppelkettenband (76) als Doppelaußenkettenband ausgebildet ist.

2. Kettenkratzerförderer für den Untertagebergbau mit wenigstens einem Kettenrad zum Antreiben des Kettenkratzerförderers, wobei das Kettenrad auf einer Radtrommel wenigstens einen Triebstockkranz mit mehreren auf dem Umfang der Radtrommel gleichmäßig verteilt angeordneten Triebstockzähnen aufweist und zu beiden Seiten des Triebstockkranzes je einen Polygonring mit einer Ringnut hat, mit einem Doppelkettenband aus Rundgliederketten, in dem in bestimmten Abständen Kratzeisen angeordnet sind, und mit einer Förderrinne, in der das Kettenband läuft, **dadurch gekennzeichnet,** daß an den Enden (53,54) des Kettenrades (1) außen je ein Polygonring (55,56) mit einer Ringnut (59) zum Umlenken und Führen des Kettenbandes (76) vorgesehen ist, daß nahe den Polygonringen (55,56) weiter innen am Kettenrad (1) je ein Triebstockkranz (11,12) mit mehreren Triebstockzähnen (13,14,15) vorgesehen ist, die unmittelbar an den Kratzeisen (39,51,52) angreifen, und daß das Doppelkettenband (76) als Doppelaußenkettenband ausgebildet ist.

3. Kettenkratzerförderer nach Anspruch 1 oder 2, dadurch gekennzeichnet, daß jeder Triebstockkranz (11,12) zwei bis sechs Triebstockzähne aufweist.

4. Kettenkratzerförderer nach einem der vorhergehenden Ansprüche, dadurch gekennzeichnet, daß jeder Triebstockkranz (11,12) drei Triebstockzähne (13,14,15) aufweist.

5. Kettenkratzerförderer nach einem der vorhergehenden Ansprüche, dadurch gekennzeichnet, daß ein Triebstockzahn (zB. 13) aus einer Zahnbasis (16) und je einem Zahnkopf (21,22) an beiden Enden der Zahnbasis (16) für den Antrieb in beiden Drehrichtungen besteht.

6. Kettenkratzerförderer nach einem der vorhergehenden Ansprüche, dadurch gekennzeichnet, daß die Zahnbasis (16) mit der Zahntrommel (3,4) verschweißt und die Zahnköpfe (21,22) mit der Zahnbasis (16) auswechselbar verschraubt sind.

7. Kettenkratzerförderer nach einem der vorhergehenden Ansprüche, dadurch gekennzeichnet, daß das Triebstockrad (1) aus zwei gleichen Radhälften (3,4) besteht, die miteinander verschraubt sind.

8. Kettenkratzerförderer nach einem der vorhergehenden Ansprüche, dadurch gekennzeichnet, daß die Polygonringe (55,56) in Schwalbenschwanzführungen (86) des Kettenrades (1) eingesetzt sind.

9. Kettenkratzerförderer nach einem der vorhergehenden Ansprüche, dadurch gekennzeichnet, daß die Kratzeisen (39,51,52) an beiden Enden Mitnahmestifte (85) aufweisen, die in die vertikalen Kettenglieder (84) der Außenkette (76) eingreifen.

10. Kettenkratzerförderer nach einem der vorhergehenden Ansprüche, dadurch gekennzeichnet, daß zwischen den Mitnahmestiften (85) und den Kratzeisen (39,51,52) jeweils eine Sollbruchstelle vorgesehen ist, wobei die Bruchkraft der Sollbruchstelle geringer ist als die Bruchkraft der Kette (76).

FIG. 1

EP 0 371 365 A1

FIG. 2

EP 0 371 365 A1

FIG. 3

FIG. 4

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 424 452 (EISENHÜTTE WESTFALIA) * Insgesamt * | 1-3 | B 65 G 23/06 |
| A | --- | 7 | |
| Y | DE-A-3 202 303 (BÜRENER MASCHINENFABRIK) * Insgesamt * --- | 1-3 | |
| A | FR-A-2 382 386 (EISENHÜTTE WESTFALIA) * Seite 8, Zeilen 2-14; Figuren * ----- | 1,8 | |
| | | | **RECHERCHIERTE SACHGEBIETE (Int. Cl.5)** |
| | | | B 65 G |

Der vorliegende Recherchenbericht wurde für alle Patentansprüche erstellt

| Recherchenort | Abschlußdatum der Recherche | Prüfer |
|---|---|---|
| DEN HAAG | 27-02-1990 | OSTYN T.J.M. |